# EUROPEAN PATENT SPECIFICATION

(11) **EP 4 503 823 B1**
(45) Date of publication and mention of the grant of the patent: **15.07.2026**
(21) Application number: 24178458.6
(22) Date of filing: 28.05.2024
(51) Int. Cl.: H04W 72/23, H04W 74/0833, H04W 76/27

(54) **METHOD AND APPARATUS FOR DETERMINING TRANSMISSION RESOURCE FOR INITIATING DATA TRANSMISSION**
VERFAHREN UND VORRICHTUNG ZUR BESTIMMUNG EINER ÜBERTRAGUNGSRESSOURCE ZUR INITIIERUNG EINER DATENÜBERTRAGUNG
PROCÉDÉ ET APPAREIL DE DÉTERMINATION DE RESSOURCE DE TRANSMISSION POUR INITIER UNE TRANSMISSION DE DONNÉES

(30) Priority: 03.08.2023 WO PCT/CN2023/111076
(43) Date of publication of application: 05.02.2025
(73) Proprietor: Nokia Technologies Oy, 02610 Espoo (FI)
(72) Inventor: TURTINEN, Samuli Heikki, Ii (FI); KOSKINEN, Jussi-Pekka, Oulu (FI); WU, Chunli, Beijing (CN)
(74) Representative: Nokia EPO representatives

(56) References cited:
- US-A1- 2023 122 493
- OSKAR MYRBERG ET AL: "Further MT-SDT discussion", vol. RAN WG2, no. Incheon, KR; 20230522 - 20230526, 11 May 2023 (2023-05-11), XP052314576, Retrieved from the Internet <URL:https://www.3gpp.org/ftp/TSG_RAN/WG2_RL2/TSGR2_122/Docs/R2-2305352.zip R2-2305352 MT-SDT and quality measurements.docx> [retrieved on 20230511]
- ESWAR VUTUKURI ET AL: "MT-SDT procedure", vol. RAN WG2, no. Athens, GR; 20230227 - 20230303, 16 February 2023 (2023-02-16), XP052245202, Retrieved from the Internet <URL:https://www.3gpp.org/ftp/TSG_RAN/WG2_RL2/TSGR2_121/Docs/R2-2300559.zip R2-2300559_MT-SDT_Procedure_v01.docx> [retrieved on 20230216]

## Description

### TECHNICAL FIELD

Various example embodiments of the present disclosure relate generally to the technology of communication, and in particular to a method and an apparatus for determining whether or not a configured transmission resource is within a time limit for initiating a data transmission.

### BACKGROUND

In a communication network, particularly in the wireless communication system, the transmission resources for data transmission are shared by many participants. Usually, a communication participant, such as a UE, will try to find a next valid transmission resource and then try to use it for data transmission, either transmitting or receiving.

However, if the next transmission resource is far in time for the participant, the latency of data transmission will be increased.

US 2023/122493 discloses a method and a user equipment (UE) for logical channel (LCH) configuration in small data transmission (SDT). The method includes: receiving, from a base station (BS), a radio resource control (RRC) release message; determining whether the RRC release message includes a specific configuration, the specific configuration including an SDT configuration and an SDT-specific LCH configuration; transitioning to an RRC INACTIVE state after determining that the RRC release message includes the specific configuration; initiating an SDT procedure based on the SDT configuration when the UE is in the RRC_INACTIVE state; and applying at least one LCH restriction parameter included in the SDT-specific LCH configuration for a Logical Channel Prioritization (LCP) procedure during the SDT procedure.

### SUMMARY

This summary is provided to introduce some aspects in a simplified form that are further described below in the detailed description. The invention is defined by the independent claims. Embodiments are defined in the dependent claims.

Certain aspects of the present disclosure and their embodiments may provide solutions to these or other challenges. There are, proposed herein, various embodiments which address one or more of the issues disclosed herein. Specific method and apparatus for determining a transmission resource for initiating a data transmission may be provided.

Embodiments herein afford many advantages. According to embodiments of the present disclosure, an improved manner for determining a transmission resource for initiating a data transmission may be provided.

According to embodiments of the present disclosure, by initiating, based on the transmission resource being within the time limit and being valid for a data transmission, the data transmission using the transmission resource in an inactive state, the time limit is considered for determining the transmission resource, and thus the data transmission can be performed timely.

### BRIEF DESCRIPTION OF DRAWINGS

The above and other aspects, features, and benefits of various embodiments of the present disclosure will become more fully apparent, by way of example, from the following detailed description with reference to the accompanying drawings, in which like reference numerals or letters are used to designate like or equivalent elements. The drawings are illustrated for facilitating better understanding of the embodiments of the disclosure and not necessarily drawn to scale, in which:
FIG. 1A is a flow chart showing a method performed by a terminal device, according to exemplary embodiments of the present disclosure.
FIG. 1B is a flow chart showing further steps of the method as shown in FIG. 1A, according to exemplary embodiments of the present disclosure.
FIG. 1C is a flow chart showing further steps of the method as shown in FIG. 1A, according to exemplary embodiments of the present disclosure.
FIG. 1D is a flow chart showing further steps of the method as shown in FIG. 1A, according to exemplary embodiments of the present disclosure.
FIG. 2 is a flow chart showing a method performed by a network node, according to exemplary embodiments of the present disclosure.
FIG. 3 is a block diagram showing an exemplary structure for the terminal device, according to exemplary embodiments of the present disclosure.
FIG. 4 is a block diagram showing an exemplary structure for the network node, according to exemplary embodiments of the present disclosure.
FIG. 5 is a block diagram showing an apparatus/computer readable storage medium, according to embodiments of the present disclosure.
FIG. 6 is a block diagram showing exemplary apparatus units for the terminal device, which is suitable for performing the method according to embodiments of the disclosure.
FIG. 7 is a block diagram showing exemplary apparatus units for the network node, which is suitable for performing the method according to embodiments of the disclosure.

### DETAILED DESCRIPTION

The embodiments of the present disclosure are described in detail with reference to the accompanying drawings. It should be understood that these embodiments are discussed only for better understanding, rather than limitations on the scope of the present disclosure. The described features, advantages, and characteristics of the disclosure may be combined in any suitable manner in one or more embodiments.

Generally, all terms used herein are to be interpreted according to their ordinary meaning in the relevant technical field, unless a different meaning is clearly given and/or is implied from the context in which it is used. The steps of any methods disclosed herein do not have to be performed in the exact order disclosed, unless clearly given and/or implied from the context. Any feature of any of the embodiments disclosed herein may be applied to any other embodiment, wherever appropriate.

As used herein, the term "network" or "communication network" refers to a network following any suitable communication standards (such for an internet network, or any wireless network). For example, wireless communication standards may comprise WLAN (Wireless Local Area Network), new radio (NR), long term evolution (LTE), LTE-Advanced, 5G NR, etc. In the following description, the terms "network" and "system" can be used interchangeably.

The term "network node" refers to a network device or network entity or network function or any other devices (physical or virtual) in a communication network. For example, the network node in the network may include a base station (BS), an access point (AP), or any other suitable device in a wireless communication network. The BS may be, for example, a node B (NodeB or NB), an evolved NodeB (eNodeB or eNB), a next generation NodeB (gNodeB or gNB), a remote radio unit (RRU), a radio header (RH), a remote radio head (RRH), a relay, a low power node such as a femto, a pico, and so forth.

The term "terminal device" refers to any end device that can access a communication network and receive services therefrom. By way of example and not limitation, the terminal device refers to a mobile terminal, user equipment (UE), a non- AP device (such as a non-AP STA), or other suitable devices. The terminal device may include, but not limited to, a mobile phone, a cellular phone, a smart phone, a wearable device, a vehicle-mounted wireless terminal device, a vehicle, and the like.

As one example, a terminal device may represent a device configured for communication in accordance with one or more communication standards promulgated by any standard organization, such as 3^{rd} generation partnership project, 3GPP.

As yet another example, in an Internet of Things (IoT) scenario, a terminal device may represent a machine or other device that performs monitoring and/or measurements, and transmits the results of such monitoring and/or measurements to another terminal device and/or network equipment. Particular examples of such machines or devices are sensors, metering devices such as power meters, industrial machinery, or home or personal appliances, for example refrigerators, televisions, personal wearables such as watches etc. In other scenarios, a terminal device may represent a vehicle or other equipment that is capable of monitoring and/or reporting on its operational status or other functions associated with its operation.

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the associated listed terms.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

Exemplary embodiments of the disclosure are relevant to determining a transmission resource for initiating a data transmission. Firstly, a Small Data Transmission, SDT, will be illustrated below, for example without limitation.

A new work item for Mobile Terminated-Small Data Transmission (MT-SDT) for NR was approved in 3GPP document RP-213583. Following recaps the justification and the objectives of the work.

### 3 Justification

*Rel-17 specified MO-SDT to allow small packet transmission for UL-orientedpackets. For DL, MT-SDT (i.e. DL-triggered small data) allows similar benefits, i.e. 1) reducing signalling overhead and UE power consumption by not transitioning to RRC CONNECTED and reducing latency by allowing fast transmission of (small and infrequent) packets, e.g. for positioning.*

### 4 Objective

### 4.1 Objective of SI or Core part WI or Testing part WI

*Specify the support for paging-triggered SDT (MT-SDT) [RAN2, RAN3]*
- *MT-SDT triggering mechanism for UEs in RRC_INACTIVE, supporting RA-SDT and CG-SDT as the UL response;*
- *MT-SDTprocedure for initial DL data reception and subsequent UL*/*DL data transmissions in RRC INACTIVE.*
*Note: Data transmission in DL within paging message is not in scope of this WI.*

Additionally, a Mobile Originated SDT (MO-SDT) for NR was specified in Rel-17 (Release-17). The following is the Stage-2 description of the MO-SDT feature (3^{rd} generation partnership project technical specification (3GPP TS) 38.300 v17.2.0 (2022-09)).

### 18 Small Data Transmission

### 18.0 General

*Small Data Transmission (SDT) is a procedure allowing data and*/*or signalling transmission while remaining in RRC INACTIVE state (i.e. without transitioning to RRC_CONNECTED state). SDT is enabled on a radio bearer basis and is initiated by the UE only if less than a configured amount of UL data awaits transmission across all radio bearers for which SDT is enabled, the DL RSRP is above a configured threshold, and a valid SDT resource is available as specified in clause 5.27.1 of TS 38.321 [6].*

*SDT procedure is initiated with either a transmission over RACH (configured via system information) or over Type 1 CG resources (configured via dedicated signalling in RRCRelease). The SDT resources can be configured on initial BWP for both RACH and CG. RACH and CG resources for SDT can be configured on either or both of NUL and SUL carriers. The CG resources for SDT are valid only within the PCell of the UE when the RRCRelease with suspend indication is received. CG resources are associated with one or multiple SSB(s). For RACH, the network can configure 2-step and*/*or 4-step RA resources for SDT. When both 2-step and 4-step RA resources for SDT are configured, the UE selects the RA type according to clause 9.2.6. CFRA is not supported for SDT over RACH.*

*Once initiated, the SDT procedure is either:*
- *successfully completed after the UE is directed to RRC_IDLE (via RRCRelease) or to continue in RRC_INACTIVE (via RRCRelease or RRCReject) or to RRC_CONNECTED (via RRCResume or RRCSetup); or*
- *unsuccessfully completed upon cell re-selection, expiry of the SDT failure detection timer, a MAC entity reaching a configured maximum PRACH preamble transmission threshold, an RLC entity reaching a configured maximum retransmission threshold, or expiry of SDT-specific timing alignment timer while SDT procedure is ongoing over CG and the UE has not received a response from the network after the initial PUSCH transmission.*

*Upon unsuccessful completion of the SDT procedure, the UE transitions to RRC_IDLE.*

*The initial PUSCH transmission during the SDT procedure includes at least the CCCH message. When using CG resources for initial SDT transmission, the UE can perform autonomous retransmission of the initial transmission if the UE does not receive confirmation from the network (dynamic UL grant or DL assignment) before a configured timer expires as specified in clause 5.4.1 of TS 38.321 [6]. After the initial PUSCH transmission, subsequent transmissions are handled differently depending on the type of resource used to initiate the SDT procedure:*
- *When using CG resources, the network can schedule subsequent UL transmissions using dynamic grants or they can take place on the following CG resource occasions. The DL transmissions are scheduled using dynamic assignments. The UE can initiate subsequent UL transmission only after reception of confirmation (dynamic UL grant or DL assignment) for the initial PUSCH transmission from the network. For subsequent UL transmission, the UE cannot initiate re-transmission over a CG resource.*
- *When using RACH resources, the network can schedule subsequent UL and DL transmissions using dynamic UL grants and DL assignments, respectively, after the completion of the RA procedure.*

*While the SDT procedure is ongoing, if data appears in a buffer of any radio bearer not enabled for SDT, the UE initiates a transmission of a non-SDT data arrival indication using UEAssistanceInformation message to the network and, if available, includes the resume cause.*

*SDT procedure over CG resources can only be initiated with valid UL timing alignment. The UL timing alignment is maintained by the UE based on a SDT-specific timing alignment timer configured by the network via dedicated signalling and, for initial CG-SDT transmission, also by DL RSRP of configured number of highest ranked SSBs which are above a configured RSRP threshold. Upon expiry of the SDT-specific timing alignment timer, the CG resources are released while maintaining the CG resource configuration.*

*Logical channel restrictions configured by the network while in RRC_CONNECTED state and*/*or in RRCRelease message for radio bearers enabled for SDT, if any, are applied by the UE during SDT procedure.*

*The network may configure UE to apply ROHC continuity for SDT either when the UE initiates SDT in the PCell of the UE when the RRCRelease with suspend indication was received or when the UE initiates SDT in a cell of its RNA.*

MO-SDT procedure is initiated as follows in Media Access Control (MAC) TS 38.321 V17.3.0 (2022-12).

### 5.27.1 General

... ... *The MAC entity shall, if initiated by the upper layers for SDT procedure:*
*1>if the data volume of the pending UL data across all RBs configured for SDT is less than or equal to sdt-DataVolumeThreshold; and*
   *NOTE: For SDT procedure, the MAC entity also considers the suspended RBs configured with SDT for data volume calculation. It is up to the UE's implementation how the UE calculates the data volume for the suspended RBs. Size of the CCCH message is not considered for data volume calculation*
*1>if the RSRP of the downlink pathloss reference is higher than sdt-RSRP-Threshold; or*
*1>if sdt-RSRP-Threshold is not configured:*
   *2>if the Serving Cell is configured with supplementary uplink as specified in TS 38.331 [5]; and*
   *2>if the RSRP of the downlink pathloss reference is less than rsrp-ThresholdSSB-SUL:*
      *3>select the SUL carrier.*
   *2>else:*
      *3>select the NUL carrier.*
   *2>if CG-SDT is configured on the selected UL carrier, and TA for CG-SDT is valid according to clause 5.27.2 in the first available CG occasion for initial CG-SDT transmission with CCCH message according to clause 5.8.2; and*
   *2>if, for each RB having data available for transmission, configuredGrantType Allowed, if configured, is configured with value true for the corresponding logical channel; and*
   *2>if at least one SSB configured for CG-SDT with SS-RSRP above cg-SDT-RSRP-ThresholdSSB is available:*
      *3>indicate to the upper layers that the conditions for initiating SDT procedure are fulfilled;*
      *3>perform CG-SDT procedure on the selected UL carrier according to clause 5.8.2.*
   *2>else if a set of Random Access resources for performing RA-SDT are selected according to clause 5.1.1b on the selected UL carrier:*
      *3>if cg-SDT-TimeAlignmentTimer is running, consider cg-SDT-TimeAlignmentTimer as expired and perform the corresponding actions in clause 5.2;*
      *3>indicate to the upper layers that the conditions for initiating SDT procedure are fulfilled.*
   *2>else:*
      *3>indicate to the upper layers that the conditions for initiating SDT procedure are not fulfilled.*
*1>else:*
   *2>indicate to the upper layers that the conditions for initiating SDT procedure are not fulfilled.*

Further, the following agreements were made for MT-SDT by the 3GPP meeting RAN2#122.

During the meeting, some agreements are confirmed with main session.

For both MO and MT-SDT, if the next CG-SDT resource is too far, then RACH resource can be selected first. This is checked at the point of initial resource selection (e.g., CG SDT selection). For further study (FFS), what is too far and how this is configured. Assumption is that this discussion in SDT session will be continued. This was then confirmed by main session.

In 3GPP document R2-2305350, SDT Enhancements for Configured grants [SDT-Enh-CG], for proposal P4 (Before the first transmission over the CG-SDT resource happens, the UE checks if the time until the next CG-SDT transmission occasion is longer than a configurable threshold, if so, an RA-SDT procedure is triggered), it was agreed in MT-SDT session. The chair wonder if the other proposals can be agreed.

For proposal P1a (Extend the maximum periodicity for CG-SDT to cover longer periodicities and allow the CG-SDT procedure to fall back to a RACH based access procedure),
- One opinion is that this may have R1(working group) impact if going > 640ms, thinking that UE power saving and search space configuration etc. will be impacted.
- One opinion is that the reason is for resource consumption for use cases that don't need frequent resources.
- One opinion is that the time would be in hours. Another opinion is that for such cases RACH SDT can be used.
- One opinion is that the impact to R1 is limited and just new values in the table are needed.
- One wonder is that if we need to cover the fallback, it seems different.
- Chair thinks that, considering that P4 was agreed, it seems there is no support for further agreements.

It is agreeable that, under condition that RAN1 impact is very small (e.g., update of a table), the maximum periodicity for CG-SDT may be extended to cover longer periodicities. LS (Liaison statement) will be sent to R1 to ask about impact.

CG-SDT resources are associated with beams (SSBs, Synchronization Signal and Physical broadcast Channel block) and not necessarily all beams are assigned a CG-SDT resource for a UE. Multiple CG configurations may be configured for CG-SDT and these can be assigned to (partly) different or same beams.

How to determine by the UE that next CG-SDT resource is "too far" upon initiation of the SDT procedure is not yet defined or discussed.

Furthermore, the current specification (TS 38.321 V17.3.0 (2022-12)) has a bug in the condition for CG-SDT initiation:
*"if CG-SDT is configured on the selected UL carrier, and **TA for CG-SDT is valid** according to clause 5.27.2i**n the first available CG occasion** for initial CG-SDT transmission with CCCH message according to clause 5.8.2; and".*

The UE may not be able to use the first available CG occasion due to other conditions.

Embodiments of the present disclosure may provide a method and an apparatus for determining a transmission resource for initiating a data transmission.

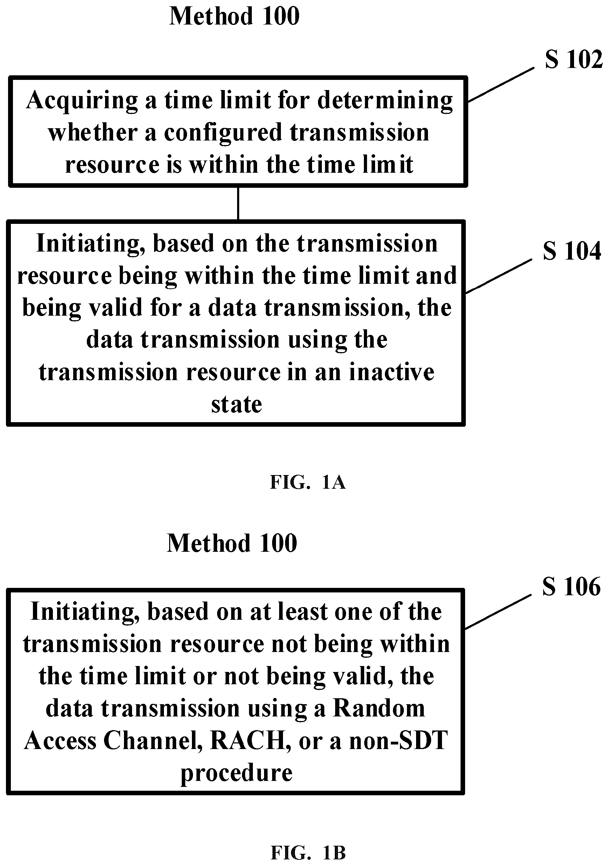

FIG. 1A is a flow chart showing a method performed by a terminal device, according to exemplary embodiments of the present disclosure.

As shown in FIG. 1A, the method 100 comprises: a step S102, acquiring a time limit for determining whether a configured transmission resource is within the time limit; and a step S104, initiating, based on the transmission resource being within the time limit and being valid for a data transmission, the data transmission using the transmission resource in an inactive state.

According to the present invention, by initiating, based on the transmission resource being within the time limit and being valid for a data transmission, the data transmission using the transmission resource in an inactive state, it can be clearly defined whether or not the transmission resource is "too far in the future", and this can be done by using the time limit. A resulting technical effect is that the data transmission can be performed timely. In other words, if the transmission resource is determined to be within the time limit (to be timely for a delay requirement of the data transmission), the data transmission can be performed in the transmission resource. On the other hand, if the transmission resource is not within the time limit (is too far in the future for the delay requirement), another transmission resource can be used for the data transmission to transmit the data timely.

Further, if the data is to be transmitted by the terminal device, the terminal device may initiate the data transmission by directly transmitting the data in the transmission resource. If the data is to be received by the terminal device, the terminal device may initiate the data transmission by sending a message to indicate the transmitter to transmit the data using the transmission resource. Such message may be any kind of request/response message/signalling to the transmitter (such as a base station or another terminal device).

In exemplary embodiments of the present disclosure, the data transmission comprises a small data transmission, SDT; and the transmission resource comprises a configured grant, CG, occasion for the SDT.

The data transmission may be a so-called CG-SDT. However, it should be understood that the method of the embodiments may be applied to other kinds of data transmissions.

In exemplary embodiments of the present disclosure, the CG occasion is a first valid CG occasion after the terminal device has determined that the transmission resource is within the time limit.

According to embodiments of the present disclosure, whether a first valid CG occasion is too far or not may be clearly determined.

FIG. 1B is a flow chart showing further steps of the method as shown in FIG. 1A, according to exemplary embodiments of the present disclosure.

In exemplary embodiments of the present disclosure, the method 100 further comprises: a step S106, initiating, based on at least one of the transmission resource not being within the time limit or not being valid, the data transmission using a Random Access Channel, RACH, or a non-SDT procedure. Such a fallback method for transmitting the data may ensure the timely transmission of the data.

That is, when a so called CG-SDT is too far, a RACH SDT or a non-SDT procedure may be used. A non-SDT procedure may be a procedure to establish/resume a connection state and then perform the data transmission. For example, a non-SDT procedure may be an RRC setup procedure or a RRC resume procedure. Regardless, the data transmission may be performed timely.

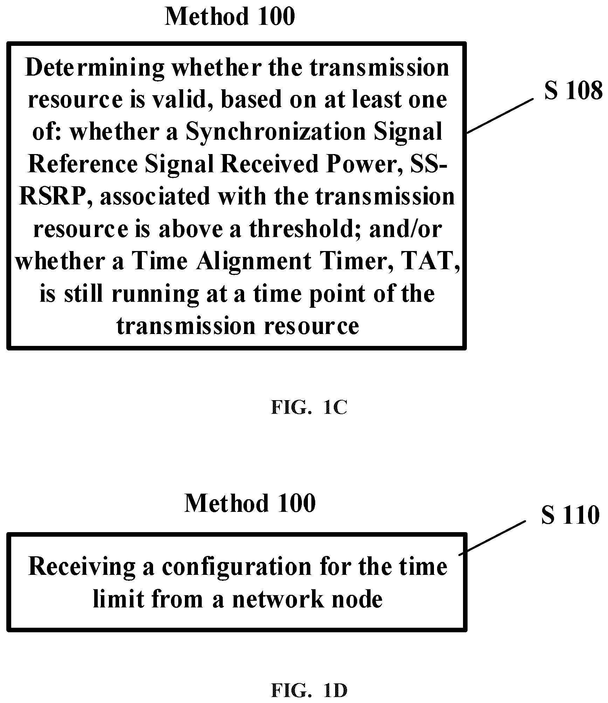

FIG. 1C is a flow chart showing further steps of the method as shown in FIG. 1A, according to exemplary embodiments of the present disclosure.

In exemplary embodiments of the present disclosure, the method further comprises: a step S108, determining whether the transmission resource is valid, based on at least one of: whether a Synchronization Signal Reference Signal Received Power, SS-RSRP, associated with the transmission resource is above a threshold; and/or whether a Time Alignment Timer, TAT, is still running at a time point of the transmission resource.

In exemplary embodiments of the present disclosure, the time limit is indicated by a number of at least one of: milliseconds, seconds, slots, mini-slots, subframes, frames, or cycles; or the time limit is indicated by a number of RACH periodicity; or the time limit is indicated by a running value for a TAT.

In exemplary embodiments of the present disclosure, the RACH periodicity is determined based on a prach-ConfigurationIndex.

According to embodiments of the disclosure, how to specifically indicate the time limit may be defined.

FIG. 1D is a flow chart showing further steps of the method as shown in FIG. 1A, according to exemplary embodiments of the present disclosure.

In exemplary embodiments of the present disclosure, the method further comprises: a step S110, receiving a configuration for the time limit from a network node.

According to embodiments of the present disclosure, the configuration for the time limit may be received from the base station. Therefore, the time limit may be dynamically configured. However, it should be understood that the time limit may be preconfigured and stored in the terminal device itself. It may be preconfigured according to practical implementation or according to 3GPP standards.

In exemplary embodiments of the present disclosure, a first configuration for the time limit is applied for a Mobile Originated Small Data Transmission, MO-SDT; and a second configuration for the time limit, different from the first configuration, is applied for a Mobile Terminated Small Data Transmission, MT-SDT.

In exemplary embodiments of the present disclosure, different time limits are applied for different Logical Channels, LCHs, and/or Radio Bearers, RBs. For example, the priority configured for a LCH and/or a RB may be used to determine a time limit. For example, the time limit may be shorter for a high priority LCH/RB while it may be longer for a lower priority LCH/RB.

According to embodiments of the present disclosure, the specific time limit value may be different for different purposes.

In exemplary embodiments of the present disclosure, the terminal device is a User Equipment, UE; and the network node is a base station.

According to embodiments of the present disclosure, the validity of the CG occasion based on which the determination of "too far" CG occasion is taken into account. Further, the UE is allowed to perform RA based SDT (or normal resume) in case the next valid CG occasion does not fullfill the time limit of "too far" CG occasion. Thus, the data transmission may be performed timely.

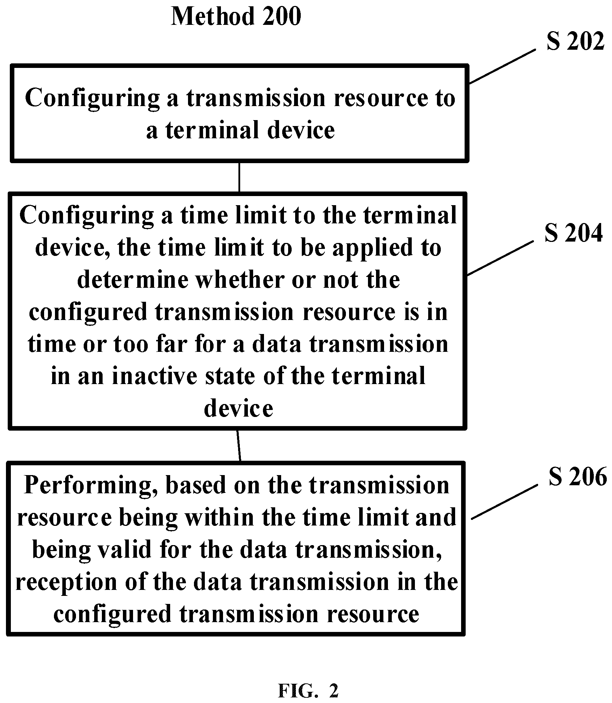

FIG. 2 is a flow chart showing a method performed by a network node, according to exemplary embodiments of the present disclosure.

As shown in FIG. 2, the method 200 comprises: a step S202, configuring a transmission resource to a terminal device; a step S204, configuring a time limit to the terminal device, the time limit to be applied to determine whether or not the configured transmission resource is in time or too far for a data transmission in an inactive state of the terminal device; and a step S206, performing, based on the transmission resource being within the time limit and being valid for the data transmission, reception of the data transmission in the configured transmission resource.

In exemplary embodiments of the present disclosure, the data transmission comprises a small data transmission, SDT; and the transmission resource comprises a configured grant, CG, occasion for SDT.

In exemplary embodiments of the present disclosure, the CG occasion is a first valid CG occasion after the terminal device has determined that the transmission resource is within the time limit.

In exemplary embodiments of the present disclosure, the data transmission is received, based on at least one of the transmission resource not being within the time limit or not being valid, using a Random Access Channel, RACH, or a non-SDT procedure.

In exemplary embodiments of the present disclosure, the validity is based on at least one of: whether a Synchronization Signal Reference Signal Received Power, SS-RSRP, associated with the transmission resource is above a threshold; and/or whether a Time Alignment Timer, TAT, is still running at a time point of the transmission resource.

In exemplary embodiments of the present disclosure, the time limit is indicated by a number of at least one of: milliseconds, seconds, slots, mini-slots, subframes, frames, or cycles; or the time limit is indicated by a number of RACH periodicity; or the time limit is indicated by a running value for a TAT. In an embodiment, the time limit changes along with the value of the TAT. If the transmission resource will be at a time instant when the current TAT is still running, the transmission resource may be considered as valid for the data transmission. If the transmission resource is at a time instant when the currently running TAT has already stopped, the transmission resource may be considered invalid for the data transmission.

In exemplary embodiments of the present disclosure, the RACH periodicity is determined based on a prach-ConfigurationIndex.

In exemplary embodiments of the present disclosure, a first configuration for the time limit is applied for a Mobile Originated Small Data Transmission, MO-SDT; and a second configuration for the time limit, different from the first configuration, is applied for a Mobile Terminated Small Data Transmission, MT-SDT.

In exemplary embodiments of the present disclosure, different time limits are applied for different Logical Channels, LCHs, and/or Radio Bearers, RBs.

In exemplary embodiments of the present disclosure, the terminal device is a user equipment, UE; and the network node is a base station.

Accordingly, the above embodiments proposed that, upon SDT procedure initiation, the UE determines (among other conditions) whether to initiate CG-SDT for the SDT procedure by determining if the **next valid CG occasion** is within specified time limit. In one example, if the next valid CG occasion is within specified time limit, UE initiates CG-SDT for the SDT procedure. In one example, if the next valid CG occasion is not within specified time limit, UE is allowed to initiate SDT procedure over RACH or non-SDT procedure immediately.

In one example, the **validity** of a CG occasion is determined based on whether the SS-RSRP of an SSB associated with the CG occasion is above a threshold (e.g., *cg-SDT-RSRP-ThresholdSSB* threshold). In one example, the validity of a CG occasion is additionally determined based on whether TAT is still running (e.g., *cg-SDT-TimeAlignmentTimer*) at the point of the CG occasion. In one example, the evaluation of these validity conditions may be performed at the same or at different times.

In one example, the time limit is configured by a network device. For example, the configured time limit is expressed in milliseconds, seconds, slots, subframes, or system frames. For example, the configured time limit is a number of default paging cycle(s) of the cell or a number of UE specific DRX cycle(s).

In one example, the time limit is determined by the UE based on the RACH configuration. For example, the RACH configuration used by the determination is based on a RACH configuration for SDT (for MO-SDT procedure) or on a RACH configuration for non-SDT (for MT-SDT procedure). For example, the time limit may be determined as a number of RACH periodicities of the RACH configuration. For example, the time limit may be determined as a number of full RACH periods before the **next valid CG occasion**. For example the RACH periodicity/period may be determined based on the *prach-ConfigurationIndex.* The number may be configured by a network device or defined in the specification.

In one example, different time limit may be applied and/or configured for MO-SDT and MT-SDT procedures.

In one example, different time limit may be applied and/or configured for different Logical Channels (LCHs) or Radio Bearers (RBs) that trigger the initiation of the SDT procedure or that have data to transmit upon the initiation of the SDT procedure. In this way, in one example, a longer time limit may be applied for delay tolerant service.

In one example, the time limit may be based on the TAT and validity condition is based on the SS-RSRP of the SSBs.

In one example, a second time limit may be configured to the UE or determined by the UE. In one example, if the next CG occasion (without considering its validity based on above embodiments) is further away than the second time limit, the UE is allowed to initiate SDT procedure over RACH or non-SDT procedure immediately.

Further detailed examples of implementation into TS 38.321 V17.4.0 (2023-03) specification is given below. It should be noted that the proposal below does not differentiate between MO-SDT and MT-SDT. However, it should be understood that different time limit may apply for these procedures and they may be specified separately.

### 5.27 Small Data Transmission

### 5.27.1 General

*The MAC entity may be configured by RRC with SDT and the SDT procedure may be initiated by RRC layer. The SDT procedure can be performed either by Random Access procedure with 2-step RA type or 4-step RA type (i.e., RA-SDT) or by configured grant Type 1 (i.e., CG-SDT). RRC configures the following parameters for SDT procedure:*
- *sdt-DataVolumeThreshold: data volume threshold for the UE to determine whether to perform SDT procedure;*
- *sdt-RSRP-Threshold: RSRP threshold for UE to determine whether to perform SDT procedure;*
- *cg-SDT-RSRP-ThresholdSSB: an RSRP threshold configured for SSB selection for CG-SDT.*
*The MAC entity shall, if initiated by the upper layers for SDT procedure:*
*1>if the data volume of the pending UL data across all RBs configured for SDT is less than or equal to sdt-DataVolumeThreshold; and*
   *NOTE 1: For SDT procedure, the MAC entity also considers the suspended RBs configured with SDT for data volume calculation. It is up to the UE's implementation how the UE calculates the data volume for the suspended RBs. Size of the CCCH message is not considered for data volume calculation*
*1>if the RSRP of the downlink pathloss reference is higher than sdt-RSRP-Threshold; or*
*1>if sdt-RSRP-Threshold is not configured:*
   *2>if the Serving Cell is configured with supplementary uplink as specified in TS 38.331 [5]; and*
   *2>if the RSRP of the downlink pathloss reference is less than rsrp-ThresholdSSB-SUL:*
      *3>select the SUL carrier.*
   *2>else:*
      *3>select the NUL carrier.*
   *2>if CG-SDT is configured on the selected UL carrier; and*
   *2>if, for each RB having data available for transmission, configuredGrantType Allowed, if configured, is configured with value true for the corresponding logical channel:*
   *2>if at least one SSB configured for CG-SDT with SS-RSRP above cg-SDT-RSRP-ThresholdSSB is available:*
      ***3>if any of the available at least one SSB configured for CG-SDT with SS-RSRP above cg-SDT-RSRP-ThresholdSSB has a next associated CG occasion within configuredTimeLimitCG-SDT; and***
      ***3>if TA for CG-SDT is valid according to clause 5.27.2 in the first CG occasion with associated SSB with SS-RSRP above cg-SDT-RSRP-ThresholdSSB for initial CG-SDT transmission with CCCH message according to clause 5.8.2:***
         *4> indicate to the upper layers that the conditions for initiating SDT procedure are fulfilled;*
         *4> perform CG-SDT procedure on the selected UL carrier according to clause 5.8.2.*
   *2>else if **conditions for initiating CG-SDT procedure are not fulfilled and** a set of Random Access resources for RA-SDT is configured and can be selected according to clause 5.1.1b on the selected UL carrier:*
      *3>if cg-SDT-TimeAlignmentTimer is running, consider cg-SDT-TimeAlignmentTimer as expired and perform the corresponding actions in clause 5.2;*
      *3>indicate to the upper layers that the conditions for initiating SDT procedure are fulfilled.*
   *2>else:*
      *3>indicate to the upper layers that the conditions for initiating SDT procedure are not fulfilled.*
*1 >else:*
   *2>indicate to the upper layers that the conditions for initiating SDT procedure are not fulfilled.*
*If RA-SDT is selected above and after the Random Access procedure is successfully completed (see clause 5.1.6), the UE monitors PDCCH addressed to C-RNTI received in random access response until the RA-SDT procedure is terminated. If CG-SDT is selected above and after the initial transmission for CG-SDT is performed, the UE monitors PDCCH addressed to C-RNTI as stored in UE Inactive AS context as specified in TS 38.331 [5] and CS-RNTI until the CG-SDT procedure is terminated.*
*NOTE 2: When the UE determines if there is an SSB with SS-RSRP above cg-SDT-RSRP-ThresholdSSB, the UE uses the latest unfiltered L1-RSRP measurement.*

The parameter *configuredTimeLimitCG-SDT* may define the last time point in which the CG occasion is still considered as valid (i.e., in the time limit). The name of the parameter is just an example and may be anything in the end or consist of multiple parameters.

The embodiments of the present disclosure provide advantages including at least follows.
- The validity of the CG occasion based on which the determination of "too far" CG occasion is taken into account.
- The UE is allowed to perform RA based SDT (or normal resume) in case the next valid CG occasion does not fullfill the time limit of "too far" CG occasion.

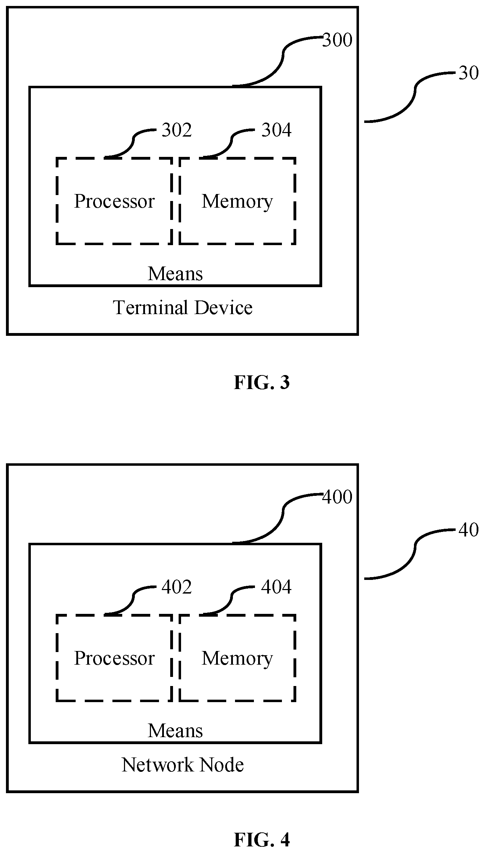

FIG. 3 is a block diagram showing an exemplary structure for the terminal device, according to exemplary embodiments of the present disclosure.

As shown in FIG. 3, the terminal device 30 comprises means 300 configured for: acquiring a time limit for determining whether a configured transmission resource is within the time limit; and initiating, based on the transmission resource being within the time limit and being valid for a data transmission, the data transmission using the transmission resource in an inactive state.

In exemplary embodiments of the present disclosure, the means 300 are further configured for performing the method according any of the embodiments above mentioned, such as shown in FIG. 1A, 1B, 1C, 1D.

In exemplary embodiments of the present disclosure, the means 300 comprise: at least one processor 302; and at least one memory 304 storing instructions that, when executed by the at least one processor 302, cause the performance of the terminal device 30.

FIG. 4 is a block diagram showing an exemplary structure for the network node, according to exemplary embodiments of the present disclosure.

As shown in FIG. 4, a network node 40 comprises means 400 configured for: configuring a transmission resource to a terminal device; configuring a time limit to the terminal device, the time limit to be applied to determine whether or not the configured transmission resource is in time or too far for a data transmission in an inactive state of the terminal device; and performing, based on the transmission resource being within the time limit and being valid for the data transmission, reception of the data transmission in the configured transmission resource.

In exemplary embodiments of the present disclosure, the means 400 are further configured for performing the method according any of the embodiments above mentioned, such as shown in FIG. 2.

In exemplary embodiments of the present disclosure, the means 400 comprise: at least one processor 402; and at least one memory 404 storing instructions that, when executed by the at least one processor 402, cause the performance of the network node 40.

The processor 302, 402 may be any kind of processing component, such as one or more microprocessor or microcontrollers, as well as other digital hardware, which may include digital signal processors (DSPs), special-purpose digital logic, and the like. The memory 304, 404 may be any kind of storage component, such as read-only memory (ROM), random-access memory, cache memory, flash memory devices, optical storage devices, etc.

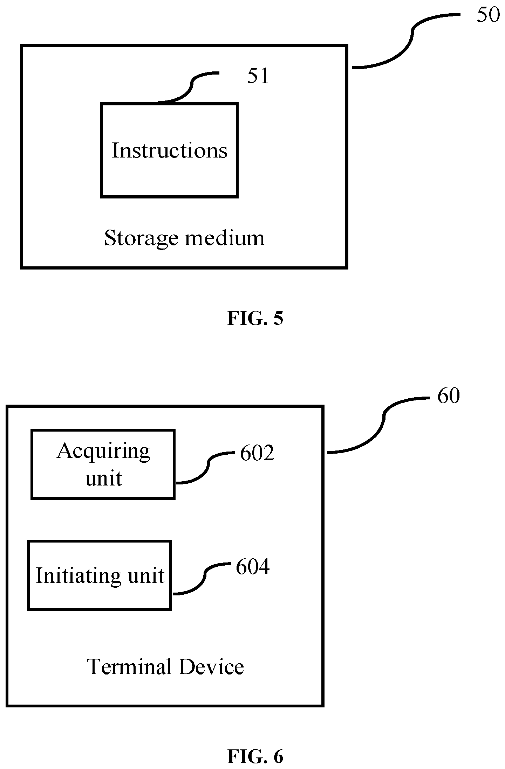

FIG. 5 is a block diagram showing an apparatus/computer readable storage medium, according to embodiments of the present disclosure.

As shown in FIG. 5, a computer-readable storage medium 50 storing instructions 51, which when executed by at least one processor of a terminal device, cause the at least one processor of the terminal device to perform the method according to any of the embodiments above mentioned, such as shown in FIG. 1A, 1B, 1C, 1D; or when executed by at least one processor of a network node, cause the at least one processor of the network node to perform the method according to any of the embodiments above mentioned, such as shown in FIG. 2.

In addition, the present disclosure may also provide a carrier containing the computer program/instructions as mentioned above. The carrier is one of an electronic signal, optical signal, radio signal, or the above computer readable storage medium. The computer readable storage medium can be, for example, an optical compact disk or an electronic memory device like a RAM (random access memory), a ROM (read only memory), Flash memory, magnetic tape, CD-ROM, DVD, Blue-ray disc and the like.

FIG. 6 is a block diagram showing exemplary apparatus units for the terminal device, which is suitable for performing the method according to embodiments of the disclosure.

As shown in FIG. 6, the terminal device 60 may include, an acquiring unit 602, configured for acquiring a time limit for determining whether a configured transmission resource is within the time limit; and an initiating unit 604, configured for initiating, based on the transmission resource being within the time limit and being valid for a data transmission, the data transmission using the transmission resource in an inactive state.

In exemplary embodiments of the present disclosure, the terminal device 60 is further configured for performing the method according any of the embodiments above mentioned, such as shown in FIG. 1A, 1B, 1C, 1D.

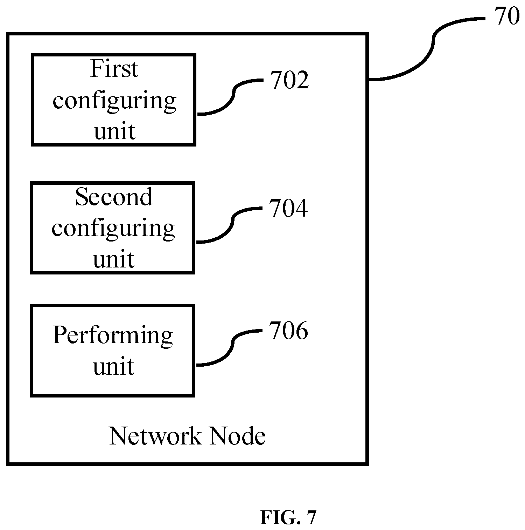

FIG. 7 is a block diagram showing exemplary apparatus units for the network node, which is suitable for performing the method according to embodiments of the disclosure.

As shown in FIG. 7, the network node 70 may include: a first configuring unit 702, configured for configuring a transmission resource to a terminal device; a second configuring unit 704, configuring a time limit to the terminal device, the time limit to be applied to determine whether or not the configured transmission resource is in time or too far for a data transmission in an inactive state of the terminal device; and a performing unit 706, configured for performing, based on the transmission resource being within the time limit and being valid for the data transmission, reception of the data transmission in the configured transmission resource.

The first configuration unit 702 and the second configuration unit 704 may be or not the same unit.

In exemplary embodiments of the present disclosure, the network node 70 is further configured for performing the method according any of the embodiments above mentioned, such as shown in FIG. 2.

The term 'unit' may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

As used in the present disclosure, the term "circuitry" may refer to one or more or all of the following:
(a) hardware-only circuit implementations (such as implementations in only analogy and/or digital circuitry) and
(b) combinations of hardware circuits and software, such as (as applicable):
   (i) a combination of analogy and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in the present disclosure, including in any claims. As a further example, as used in the present disclosure, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

With these units, the apparatus may not need a fixed processor or memory, any kind of computing resource and storage resource may be arranged from at least one network node/device/entity/apparatus relating to the communication system. The virtualization technology and network computing technology (e.g., cloud computing) may be further introduced, so as to improve the usage efficiency of the network resources and the flexibility of the network.

The techniques described herein may be implemented by various means so that an apparatus implementing one or more functions of a corresponding apparatus described with an embodiment comprises not only prior art means, but also means for implementing the one or more functions of the corresponding apparatus described with the embodiment and it may comprise separate means for each separate function, or means that may be configured to perform two or more functions. For example, these techniques may be implemented in hardware (one or more apparatuses), firmware (one or more apparatuses), software (one or more modules/units), or combinations thereof. For a firmware or software, implementation may be made through modules (e.g., procedures, functions, and so on) that perform the functions described herein.

In certain embodiments, some or all of the functionality described herein may be provided by processing circuitry executing instructions stored on in memory, which in certain embodiments may be a computer program product in the form of a non-transitory computer-readable storage medium. In alternative embodiments, some or all of the functionalities may be provided by the processing circuitry without executing instructions stored on a separate or discrete device-readable storage medium, such as in a hard-wired manner. In any of those particular embodiments, whether executing instructions stored on a non-transitory computer-readable storage medium or not, the processing circuitry can be configured to perform the described functionality. The benefits provided by such functionality are not limited to the processing circuitry alone or to other components of the computing device, but are enjoyed by the computing device as a whole, and/or by end users and a wireless network generally.

The term "non-transitory," as used herein, is a limitation of the medium itself (i.e., tangible, not a signal) as opposed to a limitation on data storage persistency (e.g., RAM vs. ROM).

As described in above exemplary embodiments of this disclosure, embodiments herein afford many advantages. According to embodiments of the present disclosure, an improved manner for determining a transmission resource for initiating a data transmission may be provided.

According to embodiments of the present disclosure, after specifically defining the time limit and how it is used to determine whether a transmission resource is "too far", the data transmission may be performed timely.

It should be understood that the above embodiments are only for illustration but not limitation. All changes to these embodiments not departing from the scope of the appended claims are intended to be comprised herein.

The followings are the references which are incorporated herein in their entirety:
(1) RP-213583, New WI: Mobile Terminated-Small Data Transmission (MT-SDT) for NR, 3GPP TSG RAN Meeting #94e, Electronic Meeting, Dec. 6 - 17, 2021
(2) 3GPP TS 38.300 v17.2.0 (2022-09)
(3) 3GPP TS 38.321 V17.3.0 (2022-12)
(4) 3GPP TS 38.321 V17.4.0 (2023-03)
(5) R2-2305350, 3GPP TSG-RAN WG2 #122, May 22nd - 26th, 2023

| ABBREVIATION | EXPLANATION |
|---|---|
| UE | User Equipment |
| SDT | Small Data Transmission |
| MT-SDT | Mobile Terminated-Small Data Transmission |
| CG | Configured Grant |
| MO | Mobile Originated |
| NW | Network |
| SSB | Synchronization Signal and Physical broadcast Channel block |
| RACH | Random Access Channel |
| SS-RSRP | Synchronization Signal Reference Signal Received Power |
| DRX | Discontinuous Reception |
| TAT | Time Alignment Timer |

## Claims

1. A terminal device (30) comprising:
at least one processor (302); and
at least one memory (304) storing instructions that, when executed by the at least one processor (302), cause the terminal device (30) to perform at least the following;
acquiring a time limit for determining whether the next configured transmission resource is within the time limit, hence being timely for a delay requirement of a data transmission, or too far in the future for the delay requirement, wherein the next configured transmission resource comprises a configured grant, CG, occasion for small data transmission; and
initiating, based on the next configured transmission resource being within the time limit and being valid for the small data transmission, the data transmission as small data transmission using the next transmission resource in an inactive state;
initiating (S106), based on the next configured transmission resource not being within the time limit and thus being too far in the future for the delay requirement, the data transmission as small data transmission using a Random Access Channel, RACH procedure.

2. The terminal device according to claim 1,
wherein the CG occasion is a first valid CG occasion after the terminal device has determined that the transmission resource is within the time limit.

3. The terminal device according to claim 1 or 2, further configured to:
determining (S108) whether the transmission resource is valid, based on at least one of:
whether a Synchronization Signal Reference Signal Received Power, SS-RSRP, associated with the transmission resource is above a threshold; and/or
whether a Time Alignment Timer, TAT, is still running at a time point of the transmission resource.

4. The terminal device according to any of claims 1 to 3,
wherein the time limit is indicated by a number of at least one of: milliseconds, seconds, slots, mini-slots, subframes, frames, or cycles; or
wherein the time limit is indicated by a number of RACH periodicity; or
wherein the time limit is indicated by a running value for a TAT.

5. The terminal device according to claim 4,
wherein the RACH periodicity is determined based on a prach-ConfigurationIndex.

6. The terminal device according to any of claims 1 to 5, further configured to:
receiving (S110) a configuration for the time limit from a network node.

7. The terminal device according to any of claims 1 to 6,
wherein a first configuration for the time limit is applied for a Mobile Originated Small Data Transmission, MO-SDT; and
wherein a second configuration for the time limit, different from the first configuration, is applied for a Mobile Terminated Small Data Transmission, MT-SDT.

8. The terminal device according to any of claims 1 to 7,
wherein different time limits are applied for different Logical Channels, LCHs, and/or Radio Bearers, RBs.

9. The terminal device according to any of claims 1 to 8, wherein the inactive state is RRC_INACTIVE state.

10. A network node (40) comprising:
at least one processor (402); and
at least one memory (404) storing instructions that, when executed by the at least one processor (402), cause the network node (40) to perform at least the following:
configuring a transmission resource to a terminal device, wherein the transmission resource comprises a configured grant, CG, occasion for small data transmission;
configuring a time limit to the terminal device for a small data transmission in an inactive state of the terminal device, the time limit to be applied to determine whether the next configured grant occasion is in within the time limit, hence being timely for a delay requirement of a data transmission, or too far in the future for the delay requirement; and
performing, based on the next CG occasion being within the time limit and being valid for the small data transmission, reception of the data transmission as small data transmission in the CG occasion;
performing, based on the next CG occasion not being within the time limit and thus being too far in the future for the delay requirement, reception of the data transmission as small data transmission using a Random Access Channel, RACH procedure.

11. A method (100) performed by a terminal device, comprising:
acquiring (S102) a time limit for determining whether the next configured transmission resource is within the time limit, hence being timely for a delay requirement of a data transmission, or too far in the future for the delay requirement, wherein the next configured transmission resource comprises a configured grant, CG, occasion for small data transmission; and
initiating (S104), based on the next configured transmission resource being within the time limit and being valid for the small data transmission, the data transmission as small data transmission using the next configured transmission resource in an inactive state;
initiating (S106), based on the next configured transmission resource not being within the time limit and thus being too far in the future for the delay requirement, the data transmission as small data transmission using a Random Access Channel, RACH procedure.

12. A method (200) performed by a network node, comprising:
configuring (S202) a transmission resource to a terminal device, wherein the transmission resource comprises a configured grant, CG, occasion for small data transmission;
configuring (S204) a time limit to the terminal device for a small data transmission in an inactive state of the terminal device, the time limit to be applied to determine whether or not the next CG occasion is within the time limit, hence being timely for a delay requirement of a data transmission, or too far in the future for a small data transmission in an inactive state of the terminal device; and
performing (S206), based on the next CG occasion being within the time limit and being valid for the small data transmission, reception of the data transmission as small data transmission in the CG occasion;
performing, based on the next CG occasion not being within the time limit and thus being too far in the future, reception of the data transmission as small data transmission using a Random Access Channel, RACH procedure.

## Patentansprüche

1. Endgerät (30), umfassend:
mindestens einen Prozessor (302); und
mindestens einen Speicher (304), der Anweisungen speichert, die, wenn sie von dem mindestens einen Prozessor (302) ausgeführt werden, das Endgerät (30) veranlassen, mindestens Folgendes durchzuführen:
Erlangen einer Zeitbegrenzung zum Bestimmen, ob die nächste konfigurierte Übertragungsressource innerhalb der Zeitbegrenzung liegt, und somit rechtzeitig für eine Verzögerungsanforderung einer Datenübertragung ist, oder zu weit in der Zukunft für die Verzögerungsanforderung liegt, wobei die nächste konfigurierte Übertragungsressource eine konfigurierte Zuteilung, CG, Gelegenheit für eine Kleindatenübertragung umfasst; und
Einleiten, basierend darauf, dass die nächste konfigurierte Übertragungs- ressource innerhalb der Zeitbegrenzung liegt und für die Kleindatenübertragung gültig ist, der Datenübertragung als Kleindatenübertragung unter Verwendung der nächsten Übertragungsressource in einem Inaktivzustand;
Einleiten (S106), basierend darauf, dass die nächste konfigurierte Übertragungsressource nicht innerhalb der Zeitbegrenzung liegt und somit zu weit in der Zukunft für die Verzögerungsanforderung liegt, der Datenübertragung als Kleindatenübertragung unter Verwendung eines Direktzugriffskanal-, RACH-, Verfahrens.

2. Endgerät nach Anspruch 1,
wobei die CG-Gelegenheit eine erste gültige CG-Gelegenheit ist, nachdem das Endgerät bestimmt hat, dass die Übertragungsressource innerhalb der Zeitbegrenzung liegt.

3. Endgerät nach Anspruch 1 oder 2, das ferner konfiguriert ist zum:
Bestimmen (S108), ob die Übertragungsressource gültig ist, basierend auf mindestens einem der Folgenden:
ob eine Synchronisationssignal-Referenzsignal-Empfangsleistung, SS-RSRP, die der Übertragungsressource zugeordnet ist, oberhalb eines Schwellenwerts liegt; und/oder ob ein Zeitsynchronisations-Timer, TAT, noch zu einem Zeitpunkt der Übertragungsressource läuft.

4. Endgerät nach einem der Ansprüche 1 bis 3,
wobei die Zeitbegrenzung durch eine Anzahl von mindestens einem der Folgenden angegeben wird: Millisekunden, Sekunden, Slots, Mini-Slots, Teilrahmen, Rahmen oder Zyklen; oder
wobei die Zeitbegrenzung durch eine Anzahl von RACH-Periodizitäten angegeben wird; oder
wobei die Zeitbegrenzung durch einen laufenden Wert für einen TAT angegeben wird.

5. Endgerät nach Anspruch 4,
wobei die RACH-Periodizität basierend auf einem prach-Configurationlndex bestimmt wird.

6. Endgerät nach einem der Ansprüche 1 bis 5, das ferner konfiguriert ist zum:
Empfangen (S110) einer Konfiguration für die Zeitbegrenzung von einem Netzwerkknoten.

7. Endgerät nach einem der Ansprüche 1 bis 6,
wobei eine erste Konfiguration für die Zeitbegrenzung für eine Mobile-Originated Small Data Transmission, MO-SDT, angewendet wird; und
wobei eine zweite Konfiguration für die Zeitbegrenzung, die sich von der ersten Konfiguration unterscheidet, für eine Mobile-Terminated Small Data Transmission, MT-SDT, angewendet wird.

8. Endgerät nach einem der Ansprüche 1 bis 7,
wobei unterschiedliche Zeitbegrenzungen für verschiedene logische Kanäle, LCH, und/oder Funkträger, RB, angewendet werden.

9. Endgerät nach einem der Ansprüche 1 bis 8, wobei der Inaktivzustand der RRC_INACTIVE-Zustand ist.

10. Netzwerkknoten (40), umfassend:
mindestens einen Prozessor (402); und
mindestens einen Speicher (404), der Anweisungen speichert, die, wenn sie von dem mindestens einen Prozessor (402) ausgeführt werden, den Netzwerkknoten (40) veranlassen, mindestens Folgendes durchzuführen:
Konfigurieren einer Übertragungsressource zu einem Endgerät, wobei die Übertragungsressource eine konfigurierte Zuteilung, CG, Gelegenheit für eine Kleindatenübertragung umfasst;
Konfigurieren einer Zeitbegrenzung zu dem Endgerät für eine Kleindatenübertragung in einem Inaktivzustand des Endgeräts, wobei die Zeitbegrenzung anzuwenden ist, um zu bestimmen, ob die nächste konfigurierte Zuteilungsgelegenheit innerhalb der Zeitbegrenzung liegt, und somit rechtzeitig für eine Verzögerungsanforderung einer Datenübertragung ist, oder zu weit in der Zukunft für die Verzögerungsanforderung liegt; und
Durchführen, basierend darauf, dass die nächste CG-Gelegenheit innerhalb der Zeitbegrenzung liegt und für die Kleindatenübertragung gültig ist, des Empfangs der Datenübertragung als Kleindatenübertragung in der CG-Gelegenheit;
Durchführen, basierend darauf, dass die nächste CG-Gelegenheit nicht innerhalb der Zeitbegrenzung liegt und somit zu weit in der Zukunft für die Verzögerungsanforderung liegt, des Empfangs der Datenübertragung als Kleindatenübertragung unter Verwendung eines Direktzugriffskanal-, RACH-, Verfahrens.

11. Verfahren (100), durchgeführt von einem Endgerät, umfassend:
Erlangen (S102) einer Zeitbegrenzung zum Bestimmen, ob die nächste konfigurierte Übertragungs- ressource innerhalb der Zeitbegrenzung liegt, und somit rechtzeitig für eine Verzögerungsanforderung einer Datenübertragung ist, oder zu weit in der Zukunft für die Verzögerungsanforderung liegt, wobei die nächste konfigurierte Übertragungsressource eine konfigurierte Zuteilung, CG, Gelegenheit für eine Kleindatenübertragung umfasst; und
Einleiten (S104), basierend darauf, dass die nächste konfigurierte Übertragungsressource innerhalb der Zeitbegrenzung liegt und für die Kleindatenübertragung gültig ist, der Datenübertragung als Kleindatenübertragung unter Verwendung der nächsten konfigurierten Übertragungsressource in einem Inaktivzustand;
Einleiten (S106), basierend darauf, dass die nächste konfigurierte Übertragungsressource nicht innerhalb der Zeitbegrenzung liegt und somit zu weit in der Zukunft für die Verzögerungsanforderung liegt, der Datenübertragung als Kleindatenübertragung unter Verwendung eines Direktzugriffskanal-, RACH-, Verfahrens.

12. Verfahren (200), durchgeführt von einem Netzwerkknoten, umfassend:
Konfigurieren (S202) einer Übertragungsressource zu einem Endgerät, wobei die Übertragungsressource eine konfigurierte Zuteilung, CG, Gelegenheit für eine Kleindatenübertragung umfasst;
Konfigurieren (S204) einer Zeitbegrenzung zu dem Endgerät für eine Kleindatenübertragung in einem Inaktivzustand des Endgeräts, wobei die Zeitbegrenzung anzuwenden ist, um zu bestimmen, ob die nächste CG-Gelegenheit innerhalb der Zeitbegrenzung liegt, und somit rechtzeitig für eine Verzögerungsanforderung einer Datenübertragung ist, oder zu weit in der Zukunft für eine Kleindatenübertragung in einem Inaktivzustand des Endgeräts liegt; und
Durchführen (S206), basierend darauf, dass die nächste CG-Gelegenheit innerhalb der Zeitbegrenzung liegt und für die Kleindatenübertragung gültig ist, des Empfangs der Datenübertragung als Kleindatenübertragung in der CG-Gelegenheit;
Durchführen, basierend darauf, dass die nächste CG-Gelegenheit nicht innerhalb der Zeitbegrenzung liegt und somit zu weit in der Zukunft liegt, des Empfangs der Datenübertragung als Kleindatenübertragung unter Verwendung eines Direktzugriffskanal-, RACH-, Verfahrens.

## Revendications

1. Dispositif terminal (30) comprenant :
au moins un processeur (302) ; et
au moins une mémoire (304) stockant des instructions qui, lorsqu'elles sont exécutées par ledit au moins un processeur (302), amènent le dispositif terminal (30) à effectuer au moins ce qui suit :
acquérir une limite de temps pour déterminer si la prochaine ressource de transmission configurée est dans la limite de temps, étant ainsi opportune pour une exigence de délai d'une transmission de données, ou trop loin dans le futur pour l'exigence de délai, dans laquelle la prochaine ressource de transmission configurée comprend une occasion d'attribution configurée, CG, pour une transmission de petites données ; et
initier, sur la base du fait que la prochaine ressource de transmission configurée est dans la limite de temps et est valide pour la transmission de petites données, la transmission de données en tant que transmission de petites données utilisant la prochaine ressource de transmission dans un état inactif ;
initier (S106), sur la base du fait que la prochaine ressource de transmission configurée n'est pas dans la limite de temps et est donc trop loin dans le futur pour l'exigence de délai, la transmission de données en tant que transmission de petites données à l'aide d'une procédure de canal d'accès aléatoire, RACH.

2. Dispositif terminal selon la revendication 1,
dans lequel l'occasion CG est une première occasion CG valide après que le dispositif terminal a déterminé que la ressource de transmission est dans la limite de temps.

3. Dispositif terminal selon la revendication 1 ou 2, en outre configuré pour :
déterminer (S108) si la ressource de transmission est valide, sur la base d'au moins un des éléments suivants :
si une Puissance de Signal Reçu du Signal de Référence de Synchronisation, SS-RSRP, associée à la ressource de transmission est supérieure à un seuil ; et/ou
si un Minuteur d'Alignement Temporel, TAT, est encore en cours d'exécution à un instant temporel de la ressource de transmission.

4. Dispositif terminal selon l'une quelconque des revendications 1 à 3,
dans lequel la limite de temps est indiquée par un nombre d'au moins un des éléments suivants : millisecondes, secondes, créneaux, mini-créneaux, sous-trames, trames ou cycles ; ou
dans lequel la limite de temps est indiquée par un nombre de périodicités RACH ; ou
dans lequel la limite de temps est indiquée par une valeur courante d'un TAT.

5. Dispositif terminal selon la revendication 4,
dans lequel la périodicité RACH est déterminée sur la base d'un prach-Configuration Index.

6. Dispositif terminal selon l'une quelconque des revendications 1 à 5, en outre configuré pour :
recevoir (S110) une configuration pour la limite de temps provenant d'un nœud de réseau.

7. Dispositif terminal selon l'une quelconque des revendications 1 à 6,
dans lequel une première configuration pour la limite de temps est appliquée pour une Transmission de Petites Données à Origine Mobile, MO-SDT ; et
dans lequel une deuxième configuration pour la limite de temps, différente de la première configuration, est appliquée pour une Transmission de Petites Données à Terminaison Mobile, MT-SDT.

8. Dispositif terminal selon l'une quelconque des revendications 1 à 7,
dans lequel des limites de temps différentes sont appliquées pour différents Canaux Logiques, LCH, et/ou Porteurs Radio, RB.

9. Dispositif terminal selon l'une quelconque des revendications 1 à 8, dans lequel l'état inactif est l'état RRC_INACTIVE.

10. Nœud de réseau (40) comprenant :
au moins un processeur (402) ; et
au moins une mémoire (404) stockant des instructions qui, lorsqu'elles sont exécutées par ledit au moins un processeur (402), amènent le nœud de réseau (40) à effectuer au moins ce qui suit :
configurer une ressource de transmission vers un dispositif terminal, dans lequel la ressource de transmission comprend une occasion d'attribution configurée, CG, pour une transmission de petites données ;
configurer une limite de temps vers le dispositif terminal pour une transmission de petites données dans un état inactif du dispositif terminal, la limite de temps devant être appliquée pour déterminer si la prochaine occasion d'attribution configurée est dans la limite de temps, étant ainsi opportune pour une exigence de délai d'une transmission de données, ou trop loin dans le futur pour l'exigence de délai ; et
effectuer, sur la base du fait que la prochaine occasion CG est dans la limite de temps et est valide pour la transmission de petites données, la réception de la transmission de données en tant que transmission de petites données dans l'occasion CG ;
effectuer, sur la base du fait que la prochaine occasion CG n'est pas dans la limite de temps et est donc trop loin dans le futur pour l'exigence de délai, la réception de la transmission de données en tant que transmission de petites données à l'aide d'une procédure de canal d'accès aléatoire, RACH.

11. Procédé (100) exécuté par un dispositif terminal, comprenant :
acquérir (S102) une limite de temps pour déterminer si la prochaine ressource de transmission configurée est dans la limite de temps, étant ainsi opportune pour une exigence de délai d'une transmission de données, ou trop loin dans le futur pour l'exigence de délai, dans laquelle la prochaine ressource de transmission configurée comprend une occasion d'attribution configurée, CG, pour une transmission de petites données ; et
initier (S104), sur la base du fait que la prochaine ressource de transmission configurée est dans la limite de temps et est valide pour la transmission de petites données, la transmission de données en tant que transmission de petites données utilisant la prochaine ressource de transmission configurée dans un état inactif ;
initier (S106), sur la base du fait que la prochaine ressource de transmission configurée n'est pas dans la limite de temps et est donc trop loin dans le futur pour l'exigence de délai, la transmission de données en tant que transmission de petites données à l'aide d'une procédure de canal d'accès aléatoire, RACH.

12. Procédé (200) exécuté par un nœud de réseau, comprenant :
configurer (S202) une ressource de transmission vers un dispositif terminal, dans lequel la ressource de transmission comprend une occasion d'attribution configurée, CG, pour une transmission de petites données ;
configurer (S204) une limite de temps vers le dispositif terminal pour une transmission de petites données dans un état inactif du dispositif terminal, la limite de temps devant être appliquée pour déterminer si la prochaine occasion CG est dans la limite de temps, étant ainsi opportune pour une exigence de délai d'une transmission de données, ou trop loin dans le futur pour une transmission de petites données dans un état inactif du dispositif terminal ; et
effectuer (S206), sur la base du fait que la prochaine occasion CG est dans la limite de temps et est valide pour la transmission de petites données, la réception de la transmission de données en tant que transmission de petites données dans l'occasion CG ;
effectuer, sur la base du fait que la prochaine occasion CG n'est pas dans la limite de temps et est donc trop loin dans le futur, la réception de la transmission de données en tant que transmission de petites données à l'aide d'une procédure de canal d'accès aléatoire, RACH.
